# EUROPEAN PATENT SPECIFICATION

(11) **EP 3 816 494 B1**
(45) Date of publication and mention of the grant of the patent: **29.03.2023**
(21) Application number: 20203143.1
(22) Date of filing: 21.10.2020
(51) Int. Cl.: F16L 3/02, F16L 3/04, F16L 3/10, F16L 3/223, F16L 3/237

(54) **IMPROVED SUPPORTING DEVICE FOR TUBULAR ELEMENTS**
VERBESSERTE STÜTZVORRICHTUNG FÜR ROHRFÖRMIGE ELEMENTE
DISPOSITIF DE SUPPORT AMÉLIORÉ POUR ÉLÉMENTS TUBULAIRES

(30) Priority: 04.11.2019 IT 201900020282
(43) Date of publication of application: 05.05.2021
(73) Proprietor: AKIFIX S.P.A., 39100 Bolzano (IT)
(72) Inventor: PANDOLFI, Giovanni, 60037 MONTE SAN VITO (AN) (IT)
(74) Representative: Baldi, Claudio

(56) References cited:
- WO-A1-2019/145830
- KR-Y1- 200 340 988
- US-A- 755 847

## Description

The present patent application for industrial invention relates to an improved supporting device for tubular elements.

Tubular elements, such as hydraulic pipes, pipes for electrical cables, or the like, can be installed in suspended position on a wall by means of supporting devices disposed in adjacent position and suitably configured to support said tubular elements.

The supporting devices of the prior art generally comprise plates suitable for being fixed to the wall, and supporting elements that are connected to the plate.

In several instances, all supporting elements need to be installed at the same height to dispose the pipes in horizontal position, whereas in other instances the pipes need to be installed in a precise position with a preset inclination according to the specific project.

In order to fix said plates at a preset height, an operator needs to precisely identify and mark the point on the wall where the fixing plate is to be installed.

Evidently, such an operation is delicate and requires extreme accuracy.

Moreover, in spite of the accuracy of the operator, such an operation may be impaired because, while fixing the plate, the fixing screws of the plate may be disposed in a different position with respect to the previously marked points, causing the incorrect position of the plate and the incorrect direction of the tubular element.

Plates provided with a plurality of fixing points for the supporting elements have been disclosed in order to remedy such a problem. In view of the above, the mistakes that are made during the installation of the plate can be remedied by positioning the supporting element in a higher or lower position with respect to the plate.

However, the positions for the mutual fixing between the supporting element and the plate are preset and the supporting element can only be positioned only at preset heights and therefore it is impossible to accurately remedy the mistakes that are made during the installation of the plates.

US755847 discloses an adjustable pipe-supporting bracket.

KR200340988 discloses a reducer fixing device of a sprinkler.

The purpose of the present invention is to overcome the drawbacks of the prior art by disclosing a supporting device for tubular elements that allows for easily and rapidly correcting the mistakes made during the installation of the device, in such a way that the tubular element is disposed and oriented as required.

An additional purpose of the present invention is to disclose a supporting device that is easy and inexpensive to make.

These purposes are achieved according to the invention with the characteristics of the appended independent claim 1.

Advantageous embodiments appear from the dependent claims.

The supporting device of the invention is defined by claim 1.

For the sake of clarity, the description of the supporting device according to the invention continues with reference to the appended drawings, which only have a merely illustrative, not limiting value, wherein:
Fig. 1 is an axonometric view of the supporting device according to the invention, wherein the mobile frame is disposed in a first position;
Fig. 2 is an axonometric view of the supporting device according to the invention, wherein the mobile frame is disposed in a second position;
Fig. 3 is an exploded axonometric view of the supporting device according to the invention;
Fig. 4 is a view of the supporting device of Fig. 1, wherein the mobile frame supports two tubular elements;
Fig. 5 is a view of an assembly comprising three supporting devices in adjacent position and a pipe supported by said supporting devices.

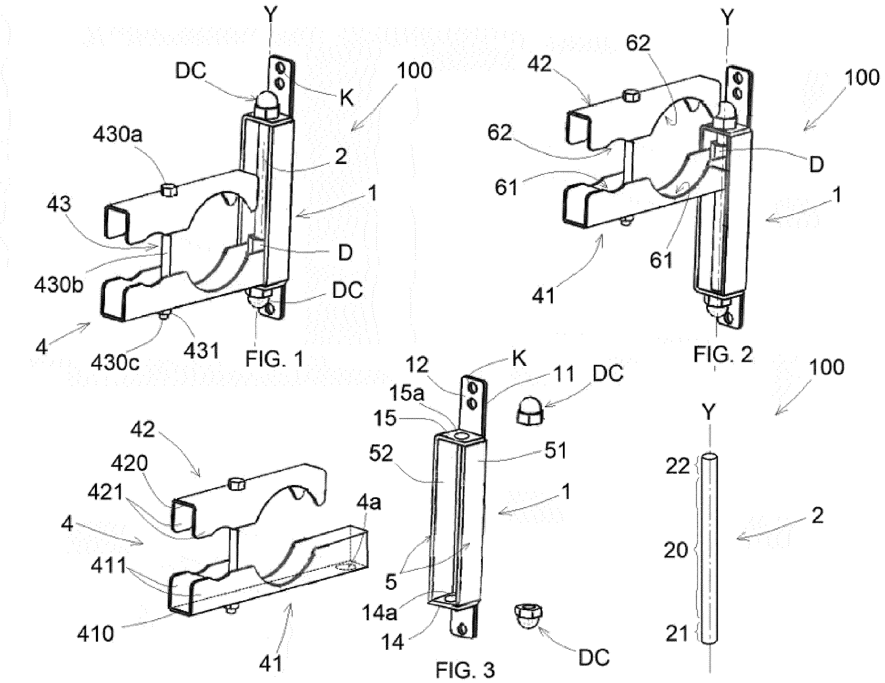

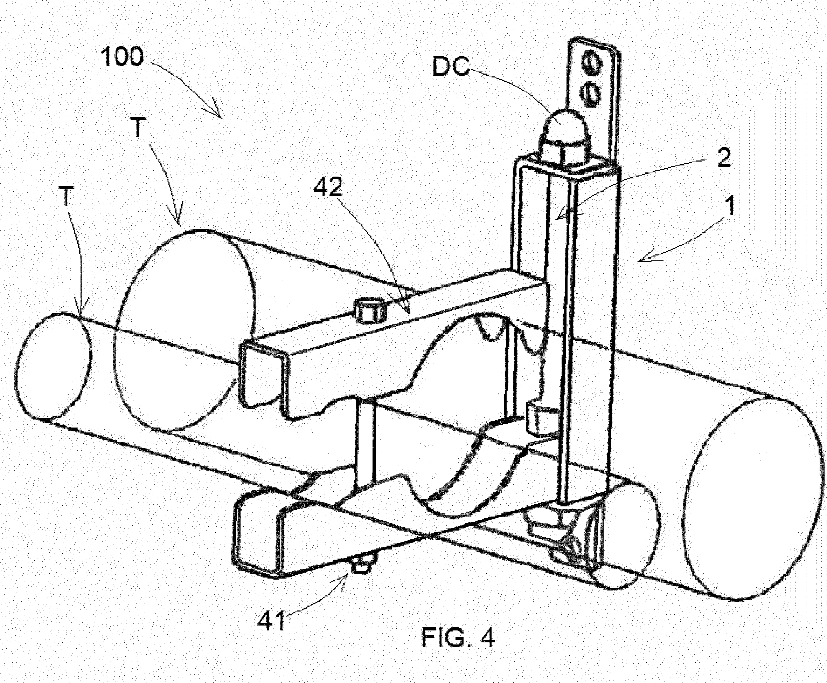

With reference to Figs. 1, 2, 3 and 4, a supporting device according to the invention is disclosed, which is generally indicated with the reference numeral (100).

The supporting device (100) comprises a fixed frame (1) suitable for being fixed to a wall by means of screws inserted in holes (K) obtained in said fixed frame (1). The fixed frame (1) consists in a plate.

The fixed frame (1) comprises a back side (11) suitable for facing the wall, and a front side (12) disposed in opposite position to the back side (11).

With reference to Fig. 3, the fixed frame (1) also comprises a first wall (14) and a second wall (15) in parallel position that orthogonally protrude from the front side (12) of the fixed frame (1). Each wall comprises a hole (14a, 15a).

With reference to Figs. 1, 2 and 3, the supporting device (100) also comprises an endless screw (2) with an axis (Y). The endless screw (2) is inserted in the holes (14a, 15a) of the two walls (14, 15) of the fixed frame (1) and comprises a central section (20) disposed between the two walls (14, 15) and two ending sections (21, 22) that protrude from the walls (14, 15).

Blind nuts (DC) are provided in the ending sections (21, 22) of the endless screw (2).

The supporting device (100) also comprises a mobile frame (4) with a threaded hole (4a) for the insertion of the endless screw (2). More precisely, the central section (20) of the endless screw (2) is inserted in the threaded hole (4a).

Because of the provision of the threaded hole (4a) for the insertion of the endless screw (2), a rotation of the endless screw (2) by means of a tool (such as a bush) corresponds to a translation along the axis (Y) of the mobile frame (4) towards the first wall (14) or towards the second wall (15).

The mobile frame (4) can translate between a first position (shown in Fig. 1), wherein the mobile frame (4) is proximal to the first wall (14), and a second position (shown in Fig. 2) wherein the mobile frame (4) is proximal to the second wall (15). The mobile frame (4) can be positioned in numberless intermediate positions between said first position and said second position.

The supporting device (100) also comprises guide means (5) that guide the mobile frame (4) during the displacement along the axis (Y) of the endless screw (2) and are configured in such a way to prevent the rotation of the mobile frame (4) relative to the axis (Y) of the endless screw (2).

With reference to Figs. 1, 2 and 3, the guide means (5) comprise a pair of edges (51, 52) in parallel position that extend between the first wall (14) and the second wall (15) of the fixed frame (1).

The mobile frame (4) is exactly and slidingly inserted between the two edges (51, 52).

Still with reference to Figs. 1, 2 and 3, the mobile frame (4) comprises a main plate (41), whereon said threaded hole is obtained, a secondary plate (42) and tightening means (43) configured in such a way to adjust the distance between the main plate (41) and the secondary plate (42).

It must be noted that said threaded hole (4a) may consist in a threaded hole (4a) provided directly on the main plate (41), or it may be provided in a nut (D) connected to the main plate (41), as shown in Figs. 1 and 2.

Preferably, each plate (41, 42) has a C-shaped cross-section with concavity directed towards the other plate (41, 42), and comprises a base section (410, 420) and two lateral sections (411, 421) disposed in parallel position and orthogonal to the base section (410, 420).

The mobile frame (4) comprises two housings (61, 62) for two tubular elements.

More precisely, each one of said two housings (61, 62) comprises a first housing (61) provided on the primary plate (41) and a second housing (62) provided on the secondary plate (42) to house a tubular element (T), at least partially.

In particular, the first housings (61) and the second housings (62) are defined by concave portions of the lateral sections (411, 421) of the plates (41, 42) that partially house/embrace the tubular elements (T).

It must be noted that the expression "tubular element" (T) refers to a pipe for electrical cables, a hydraulic pipe, a pipe of an air conditioning/heating system, and the like.

The tightening means (43) comprise a nut (430) provided with:
- a head (430a) stopped against an external side of the base section (420) of the secondary plate (42),
- a stem (430b) inserted in a hole obtained in the secondary plate (42) and in a hole obtained in the main plate (41), and
- a tip (430c) that protrudes from the main plate (42).

Said tightening means (43) also comprise a nut (431) coupled with the tip (430c) of the bolt (43) that is suitable for being stopped against an external side of the base section (410) of the main plate (41).

By screwing the nut (431) on the tip (430c) of the bolt (43), the two plates (41, 42) are moved closer and tighten the tubular element (T) or the tubular elements (T) disposed between the two plates (41, 42).

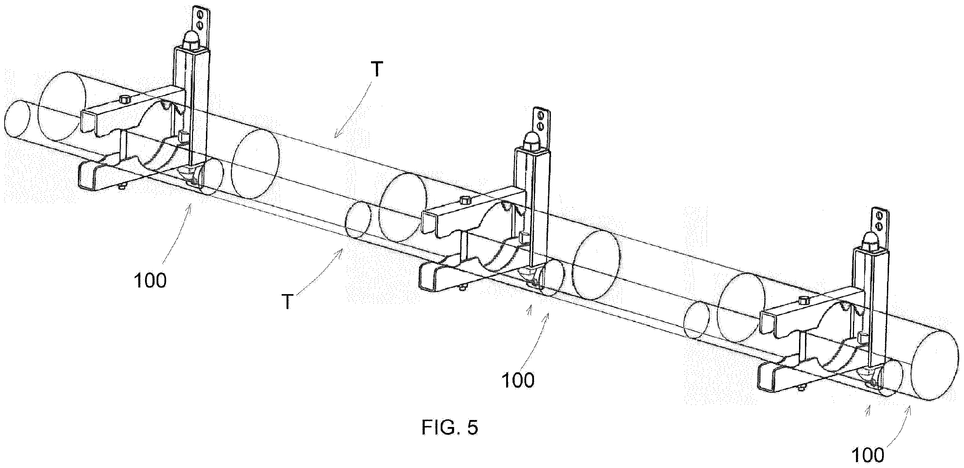

The present invention also relates to an assembly (shown in Fig. 5) comprising:
- three or more supporting devices (100) according to the invention in adjacent position and fixed to a wall, and
- one or more tubular elements (T) (Fig. 5 shows two tubular elements) supported by the supporting devices (100).

Following to the preceding description, the advantages of the present invention are manifest.

In particular, being the mobile frame (4) moved by means of the rotation of the endless screw (2), said mobile frame (4) can slide between the first wall (14) and the second wall (15) of the fixed frame (1) at any height.

In view of the above, any mistake made during the installation or the fixing of the supporting devices (100) disposed in adjacent position on a wall can be easily corrected by adjusting the position of the mobile frame (4) relative to the endless screw (2), otherwise said, relative to the fixed frame (1).

Numerous equivalent variations and modifications, which are within the reach of an expert of the field and fall in any case within the scope of the invention as disclosed by the appended claims, can be made to the present embodiment of the invention.

## Claims

1. Supporting device (100) comprising:
- a fixed frame (1) suitable for being fixed to a wall; said fixed frame (1) comprising a back side (11) suitable for facing the wall, and a front side (12) in opposite position to the back side (11); said fixed frame (1) comprising a first wall (14) and a second wall (15) in parallel position that orthogonally protrude from said front side (12); each wall (14, 15) comprising a hole (14a, 15a);
- an endless screw (2) with an axis (Y); said endless screw (2) being inserted in the holes (14a, 15a) of the pair of walls (14, 15); said endless screw (2) comprising a central section (20) disposed between the two walls (14, 15) and an ending section (21, 22) that protrudes from one of said walls (14, 15);
- a mobile frame (4) comprising a threaded hole (4a) for the insertion of the endless screw (2);
- guide means (5) that guide said mobile frame (4) along the displacement relative to the axis (Y) of the endless screw (2).

2. The supporting device (100) of claim 1, wherein said guide means (5) are configured in such a way to prevent the rotation of the mobile frame (4) relative to the axis (Y) of the endless screw (2).

3. The supporting device (100) of claim 1 or 2, wherein said mobile frame (4) comprises a housing (61, 62) for a tubular element (T).

4. The supporting device (100) of any one of the preceding claims, wherein said mobile frame (4) comprises a main plate (41) provided with a threaded hole, a secondary plate (42) and tightening means (43) configured in such a way to adjust the distance between the main plate (41) and the secondary plate (42).

5. The supporting device (100) of claim 4 when depending on claim 3, wherein said housing (61, 62) comprises a first housing (61) obtained on the main plate (41) and a second housing (62) obtained on the secondary plate (42).

6. The supporting device (100) of any one of the preceding claims, wherein said guide means (5) consist in a pair of edges (51, 52) that extend between the first wall (14) and the second wall (15) of the fixed frame (1); said mobile frame (4) being exactly and slidingly inserted between said two pairs of edges (51, 52) of the guide means (5).

7. Assembly (G) comprising three supporting devices (100) according to any one of the preceding claims, and a tubular element (T) connected to the mobile frames (4) of the three supporting devices (100).

## Patentansprüche

1. Trägervorrichtung (100), umfassend:
- einen festen Rahmen (1), der dazu bestimmt ist, an einer Wand befestigt zu werden; wobei der feste Rahmen (1) eine Rückseite (11) umfasst, die dazu bestimmt ist, der Wand zugewandt zu sein, und eine Vorderseite (12), die der Rückseite (11) gegenüberliegt; wobei der feste Rahmen (1) eine erste Wand (14) und eine zweite Wand (15) umfasst, die zueinander parallel sind und rechtwinklig aus der Vorderseite (12) vorstehen; wobei jede Wand (14, 15) ein Loch (14a, 15a) umfasst;
- eine Endlosschraube (2) mit einer Achse (Y); wobei die Endlosschraube (2) in die Löcher (14a, 15a) des Paares von Wänden (14, 15) eingesetzt ist; wobei die Endlosschraube (2) einen zentralen Abschnitt (20), der zwischen den beiden Wänden (14, 15) angeordnet ist, und einen Endabschnitt (21, 22) umfasst, der aus einer der beiden Wände (14, 15) vorsteht;
- einen beweglichen Rahmen (4), umfassend ein Gewindeloch (4a), in das die Endlosschraube (2) eingesetzt ist;
- Führungsmittel (5), die den beweglichen Rahmen (4) entlang seiner Verschiebung in Bezug auf die Achse (Y) der Endlosschraube (2) führen.

2. Trägervorrichtung (100), nach Anspruch 1, wobei die Führungsmittel (5) so gestaltet sind, dass die Drehung des beweglichen Rahmens (4) in Bezug auf die Achse (Y) der Endlosschraube (2) verhindert wird.

3. Trägervorrichtung (100) nach Anspruch 1 oder 2, wobei der bewegliche Rahmen (4) ein Gehäuse (61, 62) zur Aufnahme eines rohrförmigen Elements (T) umfasst.

4. Trägervorrichtung (100) nach einem der vorstehenden Ansprüche, wobei der bewegliche Rahmen (4) eine Hauptplatte (41), auf der das Gewindeloch herausgearbeitet ist, eine Sekundärplatte (42) und Spannmittel (43) umfasst, die so gestaltet sind, dass der Abstand zwischen der Hauptplatte (41) und der Sekundärplatte (42) eingestellt wird.

5. Trägervorrichtung (100) nach Anspruch 4, wenn abhängig von Anspruch 3, wobei das Gehäuse (61, 62) ein erstes Gehäuse (61), das auf der Hauptplatte (41) herausgearbeitet ist, und ein zweites Gehäuse (62), das auf der Sekundärplatte (42) herausgearbeitet ist, umfasst.

6. Trägervorrichtung (100) nach einem der vorstehenden Ansprüche, wobei die Führungsmittel (5) aus einem Paar von Kanten (51, 52) bestehen, die sich zwischen der ersten Wand (14) und der zweiten Wand (15) des festen Rahmens (1) erstrecken; wobei der bewegliche Rahmen (4) exakt und gleitbeweglich zwischen den beiden Paaren von Kanten (51, 52) der Führungsmittel (5) eingesetzt ist.

7. Baugruppe (G) umfassend drei Trägervorrichtungen (100) nach einem der vorstehenden Ansprüche und ein rohrförmiges Element (T), das mit den beweglichen Rahmen (4) der drei Trägervorrichtungen (100) verbunden ist.

## Revendications

1. Dispositif de support (100) comprenant :
- un châssis fixe (1) destiné à être fixé à un mur ; ledit châssis fixe (1) comprenant une face postérieure (11), destinée à être orientée vers le mur, et une face antérieure (12), opposée à celle postérieure (11); ledit châssis fixe (1) comprenant une première paroi (14) et une seconde paroi (15), parallèles entre elles, qui débordent orthogonalement de la susdite paroi antérieure (12) ; chaque paroi (14, 15) comprenant un orifice (14a, 15a) ;
- une vis sans fin (2) ayant un axe (Y) ; ladite vis sans fin (2) étant enfilée à l'intérieur des orifices (14a, 15a) de la paire de parois (14, 15) ; ladite vis sans fin (2) comprenant un segment central (20), disposé entre les deux parois (14, 15), et un segment d'extrémité (21, 22) qui déborde d'une desdites parois (14, 15) ;
- un châssis mobile (4) comprenant un orifice fileté (4a) à l'intérieur duquel est insérée la vis sans fin (2) ;
- des moyens de guidage (5) qui guident ledit châssis mobile (4) le long de son déplacement par rapport à l'axe (Y) de la vis sans fin (2).

2. Dispositif de support (100) selon la revendication 1, où lesdits moyens de guidage (5) sont conformés de manière à éviter des rotations du châssis mobile (4) par rapport à l'axe (Y) de la vis sans fin (2).

3. Dispositif de support (100) selon la revendication 1 ou 2, où ledit châssis mobile (4) comprend un logement (61, 62) pour loger un élément tubulaire (T).

4. Dispositif de support (100) selon l'une quelconque des revendications précédentes, où ledit châssis mobile (4) comprend une plaque principale (41), sur laquelle est réalisé ledit orifice fileté, une plaque secondaire (42) et des moyens de serrage (43) conformés de manière à régler la distance entre la plaque principale (41) et la plaque secondaire (42).

5. Dispositif de support (100) selon la revendication 4 quand dépendante de la revendication 3, où ledit logement (61, 62) comprend un premier logement (61) réalisé sur la plaque principale (41) et un second logement (62) réalisé sur la plaque secondaire (42).

6. Dispositif de support (100) selon l'une quelconque des revendications précédentes, où lesdits moyens de guidage (5) consistent en une paire de rebords (51, 52) qui se déploient entre la première paroi (14) et la seconde paroi (15) du châssis fixe (1) ; ledit châssis mobile (4) étant inséré exactement et coulissant entre lesdites deux paires de rebords (51, 52) des moyens de guidage (5).

7. Ensemble (G) comprenant trois dispositifs de support (100), selon l'une quelconque des revendications précédentes, et un élément tubulaire (T) relié aux châssis mobiles (4) des trois dispositifs de support (100).
